# EUROPEAN PATENT SPECIFICATION

(11) **EP 4 350 239 B1**
(45) Date of publication and mention of the grant of the patent: **17.12.2025**
(21) Application number: 22851650.6
(22) Date of filing: 10.05.2022
(51) Int. Cl.: F24F 11/64, F24F 11/87, F24F 11/871, F24F 1/06, F24F 11/43, F24F 11/81, F24F 13/10, F25B 47/00, F25B 49/02, F24F 1/56, F24F 1/48, F24F 11/84, H05K 7/20

(54) **METHOD AND DEVICE FOR ADJUSTING HEAT EXCHANGE AMOUNT OF AIR CONDITIONER OUTDOOR UNIT AND AIR CONDITIONER OUTDOOR UNIT**
VERFAHREN UND VORRICHTUNG ZUR EINSTELLUNG DER WÄRMEAUSTAUSCHMENGE EINER KLIMAANLAGENAUSSENEINHEIT UND KLIMAANLAGENAUSSENEINHEIT
PROCÉDÉ ET DISPOSITIF DE RÉGLAGE DE LA QUANTITÉ D'ÉCHANGE DE CHALEUR D'UNE UNITÉ EXTÉRIEURE DE CLIMATISEUR, ET UNITÉ EXTÉRIEURE DE CLIMATISEUR

(30) Priority: 02.08.2021 CN 202110882963
(43) Date of publication of application: 10.04.2024
(73) Proprietor: Qingdao Haier Air Conditioner General Corp., Ltd., Qingdao, Shandong 266101 (CN); Qingdao Haier Air-Conditioning Electronic Co., Ltd, Qingdao, Shandong 266101 (CN); Haier Smart Home Co., Ltd., Qingdao, Shandong 266101 (CN)
(72) Inventor: GENG, Baohan, Qingdao, Shandong 266101 (CN); MORI, Masahito, Qingdao, Shandong 266101 (CN); WANG, Pengpeng, Qingdao, Shandong 266101 (CN)
(74) Representative: dompatent
(86) International application number: PCT/CN2022/091836
(87) International publication number: WO 2023/010931

(56) References cited:
- EP-A1- 3 130 870
- CN-A- 104 534 760
- CN-A- 109 883 021
- CN-A- 109 883 021
- CN-A- 113 639 436
- US-A1- 2016 252 290

## Description

### TECHNICAL FIELD

The present invention relates to the field of household appliances, and more particularly, to a method and a device for adjusting the heat exchange amount of an air conditioner outdoor unit and an air conditioner outdoor unit.

### BACKGROUND

At present, in a case where a heat pump type air conditioner is applied to a scene such as a server room, a communication base station room and the like, the air conditioner usually needs to be in cooling operation all the time due to the large heat amount generated by the machine located in the room. When the outdoor ambient temperature is low, the heat exchange amount of an outdoor unit heat exchanger will increase, resulting in a decrease in the temperature of an indoor unit heat exchanger. When the temperature of the indoor unit heat exchanger is lower than 0°C, the indoor unit heat exchanger will begin to have the formation of frost, resulting in further reduction of heat absorption, thus affecting the cooling performance of the air conditioner. For this reason, the increase in the heat exchange amount can be restrained by reducing the rotating speed of the outdoor fan. However, when the air volume of the outdoor environment is large, the adjustment of the heat exchange amount of the air conditioner outdoor unit will be affected. The conventional art is to detect an outdoor ambient temperature and control the ventilation amount of an outdoor unit damper according to the outdoor ambient temperature, so that the ventilation amount of the outdoor unit damper is reduced when the outdoor ambient temperature is low, and the ventilation amount is increased when the outdoor ambient temperature is high.

In the practice of the embodiment of the present invention, it is found that at least the following problems of the related technology:

In the case of a sudden change of in outdoor ambient temperature, the operation load of the compressor will be increased by greatly adjusting the heat exchange amount of the air conditioner outdoor unit according to the change of outdoor ambient temperature. In the long run, it will affect the reliability of the compressor in cooling operation at a low temperature.

CN109883021A discloses a control method for air volume and an air conditioning system, the air conditioning system comprises an outdoor unit and an air volume adjusting device disposed at the outdoor unit, where the outdoor unit comprises a fan; the control method comprises: collecting the current outdoor temperature and/or the current system energy requirements of the air conditioning system; determining the adjusted air volume of the air volume adjusting device according to the current outdoor temperature and/or the current system energy requirements; and according to the adjusted air volume, the air volume adjusting device is controlled to adjust the air volume of the fan.

### SUMMARY

In order to have a basic understanding of some aspects of the disclosed embodiments a brief summary is given below. The summary is not intended to be a general comment or to identify crucial/essential constituent elements or to describe the protection scope of these embodiments but rather to serve as a preface to the detailed description that follows.

In order to overcome at least some of the disadvantages of the prior art, the present invention provides a method for adjusting a heat exchange amount of an air conditioner outdoor unit according to claim 1, a device for adjusting the heat exchange amount of an air conditioner outdoor unit according to claim 5 and an air conditioner outdoor unit according to claim 6. Preferred embodiments of the present invention are defined in the dependent claims. Accordingly, the present invention can not only automatically adjust the heat exchange amount of the air conditioner outdoor unit, but also can improve the reliability of the compressor in cooling operation at a low temperature.

In some embodiments, the method comprises:
obtaining a suction superheat of a refrigerant in a compressor and a discharge superheat of the refrigerant in the compressor;
in a case where the suction superheat is lower than a superheat threshold value or the discharge superheat is lower than the superheat threshold value, controlling a shield part to move to cover a communication opening, so as to reduce a communication area between a heat exchanger and the external environment; and
in a case where the suction superheat and the discharge superheat are both higher than or equal to the superheat threshold value and the discharge temperature of the compressor is higher than a discharge temperature threshold, controlling the shield part to move to expose the communication opening, so as to increase the communication area between the heat exchanger and the external environment.

In some embodiments, the method comprises:
detecting the rotating speed of the outdoor fan at each preset interval; and
executing the steps of the method in a case where the rotating speed of the outdoor fan is lower than a preset rotating speed threshold.

In some embodiments, the device comprises a processor and a memory storing program instructions, wherein the processor is configured to execute the method for adjusting the heat exchange amount of an air conditioner outdoor unit when executing the program instructions.

In some embodiments, the air conditioner outdoor unit comprises:
a housing, comprising a plurality of side walls and disposed with an internal installation space defined by a plurality of side walls, wherein at least one of the plurality of side walls is disposed with a communication opening;
a compressor, disposed in the internal installation space;
a heat exchanger, disposed in the internal installation space and communicated with the external environment for heat exchange through the communication opening;
a shield part, movably disposed at the communication opening; and
the device for adjusting the heat exchange amount of the air conditioner outdoor unit, disposed in the internal installation space and electrically connected to the shield part.

The method and the device for adjusting the heat exchange amount of an air conditioner outdoor unit, and an air conditioner outdoor unit provided by the embodiment of the disclosure can have the following technical advantages:

In the embodiment of the present invention, the exposed area of the outdoor unit heat exchanger can be adjusted by detecting the performance parameters of the air conditioner compressor, comparing with a preset threshold value therebetween, and controlling the shield part to move according to a comparison result. The change of the exposed area can lead to a change in the heat exchange amount, so the embodiment of the present disclosure can eventually realize the adjustment of the heat exchange amount of the air conditioner outdoor unit. According to the embodiment of the present invention, the heat exchange amount is adjusted according to the performance parameters of the air conditioner compressor, the stability of the air conditioner is more emphasized, and the unstable performance of the air condition caused by a sudden change of an external environment can be effectively avoided, thereby the reliability of the compressor in cooling operation at low temperature can be improved.

The above general description and the description below are exemplary and explanatory only and are not intended to limit the present invention, the scope of which is limited only by the appended claims.

### BRIEF DESCRIPTION OF THE DRAWINGS

One or more embodiments are illustrated by means of the corresponding drawings, which do not constitute a limitation of the embodiments, elements having the same reference numerals in the drawings are shown as similar elements, and the drawings do not constitute a limitation of proportion, wherein:
Fig. 1 is a schematic structural diagram of an air conditioner outdoor unit according to an embodiment of the present invention;
Fig. 2 is a schematic structural diagram of another air conditioner outdoor unit according to the embodiment of the present invention;
Fig. 3 is a schematic structural diagram of another air conditioner outdoor unit according to another embodiment of the present invention;
Fig. 4 is a schematic structural diagram of another air conditioner outdoor unit according to yet another embodiment of the present invention;
Fig. 5 is a schematic structural diagram of another air conditioner outdoor unit according to yet another embodiment of the present invention;
Fig. 6 is a schematic diagram of a method for adjusting the heat exchange amount of an air conditioner outdoor unit according to an embodiment of the present invention;
Fig. 7 is a schematic diagram of another method for adjusting the heat exchange amount of an air conditioner outdoor unit according to another embodiment of the present invention;
Fig. 8 is a schematic diagram of a device for adjusting the heat exchange amount of an air conditioner outdoor unit according to an embodiment of the present invention.

### REFERENCES IN THE DRAWINGS:

100: housing; 101: communication opening; 200: heat exchanger; 300: shield part; 301: support body; 302: reel shaft; 303: shield plate; 304: drive part; 305: rotation shaft; 306: blade.

### DETAILED DESCRIPTION

In order to enable a more detailed understanding of the features and technical content of the embodiments of the present invention, the implementation of the embodiments of the present invention will be described in detail below in conjunction with the accompanying drawings, which are for illustration only and are not intended to limit the embodiments of the present invention. In the following technical description for convenience of explanation, several details are provided for a full understanding of the disclosed embodiments. However, one or more embodiments may still be practiced without these details.

The terms "first", "second" and the like in the specification and claims of embodiments of the present invention and the above drawings are used to distinguish similar elements and are not necessarily used to describe a particular order or priority. It should be understood that the data used in this way can be interchanged where appropriate for the embodiments of the present invention described herein. Furthermore, the terms "include" and "have" and any variations thereof are intended to cover a non-exclusive inclusion.

Unless otherwise illustrated, the term "a plurality of" means two or more.

In the embodiment of the present disclosure, the character "/" indicates that the front element and rear element are in an "or" relationship. For example, A/B illustrates A or B.

The term "and/or" is an association relationship that describes elements, indicating that there can be three relationships. For example, A and/or B represent relationships: A or B, or A and B.

The term "corresponding" refers to an association or binding relationship, and A corresponding to B refers to an association or binding relationship between A and B.

At present, in a case where a heat pump type air conditioner is applied to a scene such as a server room, a communication base station room and the like, the air conditioner usually needs to be in cooling operation all the time due to the large heat amount generated by the machine located in the room. When the outdoor ambient temperature is low, the heat exchange amount of an outdoor unit heat exchanger will increase, decreasing the temperature of an indoor unit heat exchanger. When the temperature of the indoor unit heat exchanger is lower than 0°C, the indoor unit heat exchanger will begin to have the formation of frost, resulting in further reduction of heat absorption, thus affecting the cooling performance of the air conditioner. For this reason, the heat exchange amount can be restrained by reducing the rotating speed of the outdoor fan. However, When the air volume of the outdoor environment is large, the adjustment of the heat exchange amount of the air conditioner outdoor unit will be affected. The conventional art is to detect an outdoor ambient temperature and control the ventilation amount of an outdoor unit damper according to the outdoor ambient temperature, so that the ventilation amount of the outdoor unit damper is reduced when the outdoor ambient temperature is low, and the ventilation amount is increased when the outdoor ambient temperature is high. But in the case of a sudden change in outdoor ambient temperature, the operation load of the compressor will be increased by greatly adjusting the heat exchange amount of the air conditioner outdoor unit according to the change of outdoor ambient temperature. In the long run, it will affect the reliability of the compressor in cooling operation at a low temperature.

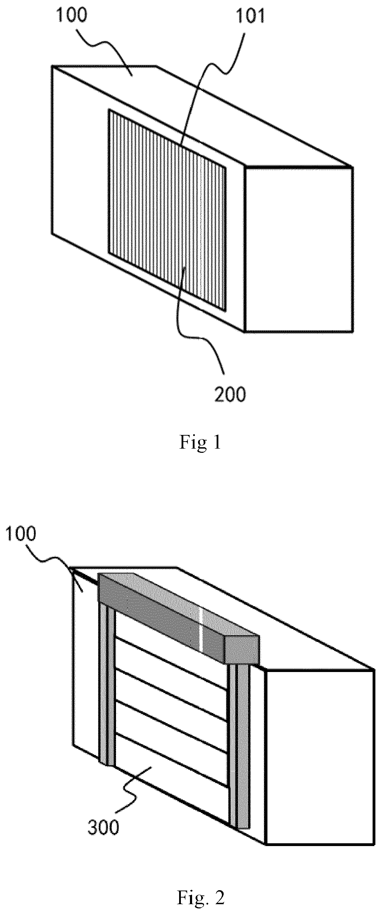

As shown in Fig. 1 and Fig. 2, the embodiment of the present invention provides an air conditioner outdoor unit, which comprises a housing 100, a heat exchanger 200, a shield part 300, a compressor, and a device (not shown) for adjusting the heat exchange amount of the air conditioner outdoor unit. The housing 100 has an internal installation space defined by a plurality of side walls, and at least one of the side walls is disposed with a communication opening 101. The heat exchanger 200 is disposed in the internal installation space, and the heat exchanger 200 can be communicated with the external environment for heat exchange through the communication opening 101. The compressor is disposed in the internal installation space. The shield part 300 is movably disposed at the communication opening 101. The device for adjusting the heat exchange amount of the air conditioner outdoor unit is disposed in the internal installation space and is electrically connected to the shield part 300.

According to the air conditioner outdoor unit provided by the embodiment of the present invention, the heat exchanger 200 can directly exchange heat with the external environment through the communication opening 101. The shield part 300 is disposed at the communication opening 101 and can completely cover the communication opening 101. By controlling the shield part 300 to move, the communication area between the heat exchanger 200 and the external environment can be adjusted, so as to realize the adjustment of the heat exchange amount of the air conditioner outdoor unit.

Optionally, the communication opening 101 can be disposed at one or more sidewalls of the housing 100. Thus, the communication between the heat exchanger 200 and the external environment can be realized from different directions, and the adjustable range of the heat exchange amount of the air conditioner outdoor unit can be increased accordingly.

Optionally, the shield part 300 can be disposed at a part or whole of the communication opening 101. Thus, the structure of the air conditioner outdoor unit can be optimized and adjusted according to the actual installation situation. In some embodiments, the shield part 300 is disposed at a necessary ventilation position, so that redundant parts can be omitted while the heat exchange amount of the air conditioner outdoor unit is adjusted, and the structure of the air conditioner outdoor unit is compact.

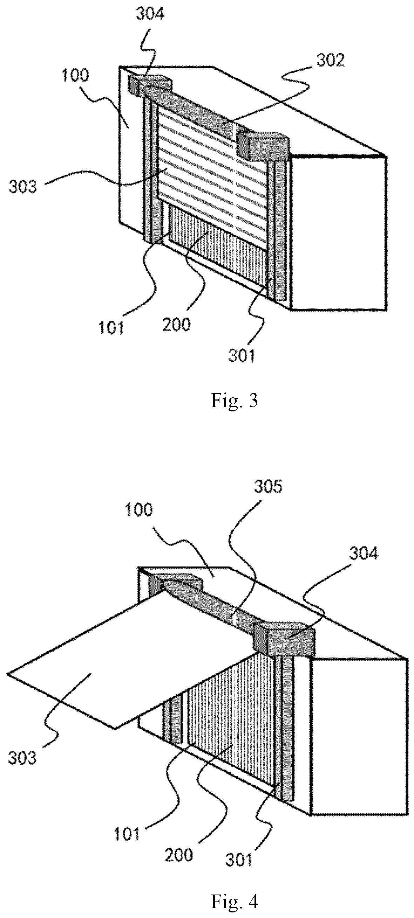

Optionally, as shown in Fig. 3, the shield part 300 comprises a support body 301, a reel shaft 302, a shield plate 303, and a drive part 304. The support body 301 is disposed on one or more sides of the communication opening 101. The reel shaft 302 is disposed on the support body 301. The shield plate 303 is connected to the reel shaft 302, and the shield plate 303 is controllably wound onto the reel shaft 302. The drive part 304 is disposed on the support body 301. The drive part 304 is connected to the reel shaft 302 and is electrically connected to the device (not shown) for adjusting the heat exchange amount of the air conditioner outdoor unit. The drive part 304 is configured to drive the reel shaft 302 to rotate. Thus, the drive part 304 drives the reel shaft 302 to rotate, and shield plate 303 connected to the reel shaft 302 can be moved accordingly. The part of the shield plate 303 close to the reel shaft 302 is wound on the reel shaft 302, and the part of the shield plate 303 away from the reel shaft 302 slides along the support body 301 relative to the communication opening 101. Along with the sliding of the shield plate 303, the exposed area of the communication opening 101 is continuously changed, so as to adjust the communication area between the heat exchanger 200 and the external environment. And eventually, the adjustment of the heat exchange amount of the air conditioner outdoor unit is realized.

Optionally, the shield plate 303 is flexible. One end of the shield plate 303 is fixedly connected to the reel shaft 302, and the other end of the shield plate 303 slides along the support body 301 relative to the communication opening 101 with the rotation of the reel shaft 302, and then gradually wound on the reel shaft 302 when approaching the reel shaft 302. Thus, the shield plate 303 can slide to different positions according to the actual situation to adjust the exposed area of the communication opening 101, so that the communication area between the heat exchanger 200 and the external environment is adjusted, and eventually, the adjustment of the heat exchange amount of the air conditioner outdoor unit is realized.

Optionally, the shield plate 303 is rigid. The shield plate 303 comprises a plurality of blades 306 which are connected in sequence. When the reel shaft 302 rotates, the blade 306 close to the reel shaft 302 is wound on the reel shaft 302, and the blade 306 away from the reel shaft 302 slides along the support body 301 relative to the communication opening 101. Thus, the shield plate 303 could be prevented from being deformed after being wound to the reel shaft 302 many times, thereby the adjustment of the exposed area of the communication opening 101 by the shield plate 303 is always smooth and reliable.

Optionally, the plurality of blades 306 can be connected in series and in sequence with a steel wire.

Optionally, one or more periphery of the support body 301 close to the shield plate 303 are disposed with a guide groove (not shown). The guide groove is configured to assist the shield plate 303 to slide along the support body 301 relative to the communication opening 101.

Optionally, the drive part 304 comprises a drive motor (not shown). The drive motor is configured to drive the reel shaft 302 to rotate.

Optionally, as shown in Fig. 4, the shield part 300 comprises a support body 301, a rotation shaft 305, a shield plate 303, and a drive part 304. The support body 301 is disposed on one or more sides of the communication opening 101. The rotation shaft 305 is disposed to the support body 301. The shield plate 303 is connected to the rotation shaft 305, and the shield plate 303 is controllably rotated with the rotation shaft 305. The drive part 304 is disposed on the support body 301, connected to the rotation shaft 305, and electrically connected to a device (not shown) for adjusting the heat exchange amount of the air conditioner outdoor unit. The drive part 304 is configured to drive the rotation shaft 305 to rotate. Thus, the rotation shaft 305 is rotated by the drive part 304, and the shield plate 303 connected to the rotation shaft 305 is also rotated. The exposed area of the communication opening 101 is also continuously changed, so that the communication area between the heat exchanger 200 and the external environment is adjusted, and eventually the adjustment of the heat exchange amount of the air conditioner outdoor unit is realized.

Optionally, the drive part 304 comprises a drive motor (not shown). The drive motor is configured to drive the rotation shaft 305 to rotate.

Optionally, the shield plate 303 is rigid. One end of the rotation plate 303 is fixed to the rotation shaft 305, and the other end of the shield plate 303 rotates around the rotation shaft 305 relative to the communication opening 101. Thus, the shield plate 303 can be rotated to different angles according to the actual situation to adjust the exposed area of the communication opening 101, thereby the communication area between the heat exchanger 200 and the external environment is adjusted, and eventually, the adjustment of the heat exchange amount of the air conditioner outdoor unit is realized.

Optionally, the rotatable angle of the shield plate 303 ranges from [0°, 90°]. At the angle of 0°, the shield plate 303 completely covers the communication opening 101 and is parallel to the side wall of the housing 100 where the communication opening 101 is located. When the shield plate 303 is rotated from 0° to 90°, the communication area between the heat exchanger 200 and the external environment is adjusted, thereby adjusting the heat exchange amount of the air conditioner outdoor unit. Also, the shield plate 303 could also prevent rainwater or dust from entering the interior of the air conditioner outdoor unit to a certain extent, which is beneficial to improving the reliability of the air conditioner outdoor unit during operation.

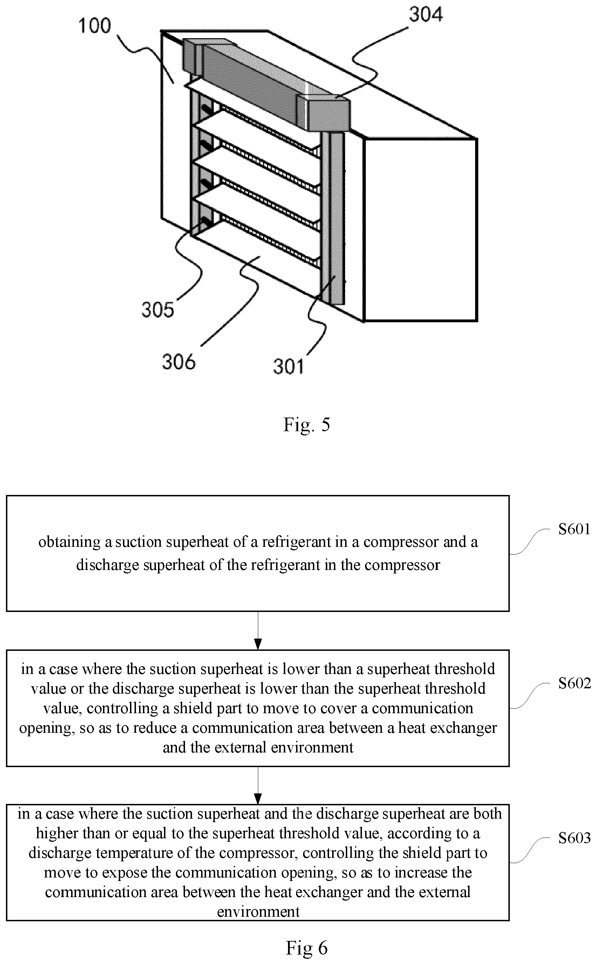

Optionally, as shown in Fig. 5, a plurality of rotation shafts 305 are disposed, and the plurality of rotation shafts 305 are disposed in parallel. The shield plate 303 comprises a plurality of blades 306 connected to the rotation shafts 305, and the plurality of blades 306 correspond to the plurality of rotation shafts 305 one by one. Thus, when the plurality of rotating shafts 305 rotate synchronously, the plurality of blades 306 rotate to the same angle at the same time, and the exposed area of the communication opening 101 changes accordingly, thereby the communication area between the heat exchanger 200 and the external environment is adjusted, and eventually the adjustment of the heat exchange amount of the air conditioner outdoor unit is realized.

Optionally, the rotatable angle of the blade 306 ranges from [0°, 90°]. At the angle of 0°, the blade 306 completely covers the communication opening 101 and is parallel to the side wall of the housing 100 where the communication opening 101 is located. Specifically, when the blade 306 is rotated from 0° to 90°, the communication area between the heat exchanger 200 and the external environment is gradually increased, thereby achieving a gradual increase in the heat exchange amount of the air conditioner outdoor unit.

Optionally, the blades 306 are louver blades in shape of rectangular.

As shown in Fig. 6, the embodiment of the present invention provides a method for adjusting the heat exchange amount of an air conditioner outdoor unit, comprising:
S601, obtaining a suction superheat of a refrigerant in a compressor and a discharge superheat of the refrigerant in the compressor;
S602, in a case where the suction superheat is lower than a superheat threshold value or the discharge superheat is lower than the superheat threshold value, controlling a shield part to move to cover a communication opening, so as to reduce a communication area between a heat exchanger and the external environment; and,
S603, in a case where the suction superheat and the discharge superheat are both higher than or equal to the superheat threshold value, according to a discharge temperature of the compressor, controlling the shield part to move to expose the communication opening, so as to increase the communication area between the heat exchanger and the external environment.

According to the method for adjusting the heat exchange amount of the air conditioner outdoor unit, which is provided by the embodiment of the invention, the exposed area of the outdoor unit heat exchanger can be adjusted by detecting the performance parameters of the air conditioner compressor, comparing with a preset threshold value therebetween, and controlling the shield part to move according to a comparison result. The change of the exposed area can lead to a change of the heat exchange amount, so the embodiment of the present invention can eventually realize the adjustment of the heat exchange amount of the air conditioner outdoor unit. According to the embodiment of the present invention, the heat exchange amount is adjusted according to the performance parameters of the air conditioner compressor, the stability of the air conditioner is more emphasized, and the unstable performance of the air condition caused by a sudden change of an external environment can be effectively avoided, thereby the reliability of the compressor in cooling operation at low temperature can be improved.

Optionally, the superheat threshold ranges from [0°C, 10°C]. The superheat threshold can be adjusted according to the actual operation of the air conditioner. Specifically, the superheat threshold may be 2°C, 5°C, or 10°C.

According to the invention, the step of, according to the discharge temperature of the compressor, controlling the shield part to move to expose the communication opening comprises: in a case where the discharge temperature of the compressor is higher than a discharge temperature threshold value, controlling the shield part to move. Thus, the air conditioner will not cause the discharge temperature to exceed the critical value due to the excessive discharge superheat, will not increase the operating load of the compressor and not affect the reliability of the compressor. Optionally, in a case where the discharge temperature of the compressor is less than or equal to the discharge temperature threshold value, the shield part does not operate, the communication area between the heat exchanger and the external environment does not change, and the heat exchange amount of the air conditioner outdoor unit remains unchanged.

Optionally, that exhaust temperature threshold can be selected according to the actual operating conditions of the air conditioner. In some embodiments, the discharge temperature threshold value is the maximum allowable discharge temperature on the compressor technical specification. Optionally, the exhaust temperature threshold value is preset at 150°C which can be adjusted according to the actual operation of the air conditioner, and could also be set to 120°C or 100°C, and other arbitrary values.

Optionally, the step of controlling the shield part to move comprises: searching a corresponding target angle from a first association relationship according to a preset target communication ratio and controlling the shield plate to rotate to the target angle. Specifically, the reel shaft is driven to rotate by the drive part, and the shield plate fixedly connected with the reel shaft also rotates therewith. Also, the exposed area of the communication opening is continuously changed, so that the communication area between the heat exchanger and the external environment is adjusted, and eventually, the adjustment of the heat exchange amount of the air conditioner outdoor unit is realized.

Optionally, the target angle is an included angle between the plane of the shield plate after adjustment and the plane of the side wall of the communication opening.

Optionally, the target communication ratio is the ratio of the target communication area between the heat exchanger and the external environment after adjustment to the maximum communication area. The maximum communication area is the communication area between the heat exchanger and the external environment when the shield plate is rotated to 90°, and the communication opening is completely exposed.

Optionally, the target communication ratio ranges from [0%, 100%]. The preset target communication ratio can be selected according to the actual operation condition of the air conditioner. In some embodiments, the preset target communication ratio can be 0%, 25%, 50%, 75%, or 100%. When the communication area between the heat exchanger and the external environment needs to be reduced, the target communication ratio can be adjusted to be lower sequentially. When the communication area between the heat exchanger and the external environment needs to be increased, the target communication ratio can be increased sequentially. The target communication ratio will not continue to decrease when reaching 0%, and the target communication ratio will not continue to increase when reaching 100%.

Optionally, the first association relationship comprises one or more corresponding relationships between the target communication ratio and the target angle. Exemplarily, Table 1 illustrates one of the corresponding relationships between the target communication ratio and the target angle, as shown in the following table:

**Table 1**

| Target communication ratio | Target angle |
|---|---|
| 0% | 0° |
| 25% | 15° |
| 50% | 30° |
| 75% | 45° |
| 100% | 90° |

In the corresponding relationship, the target communication ratio and the target angle are in a positive correlation. That is, the target angle increases as the target communication ratio increases. In some embodiments, the target communication ratio is equal to the sine value of the target angle.

Optionally, the step of, controlling the shield part to move comprises: searching a corresponding target position from the second association relationship according to a preset target communication ratio and controlling the shield plate to slide to the target position. Specifically, the drive part drives the reel shaft to rotate, and the shield plate connected with the reel can move therewith. The part of the shield plate close to the reel shaft is wound on the reel shaft, and the part of the shield plate far away from the reel shaft slides along the support body relative to the communicating opening. Along with the sliding of the shield plate, the exposed area of the communication opening is also continuously changed, thereby the communication area between the heat exchanger and the external environment is adjusted, and eventually, the adjustment of the heat exchange quantity of the air conditioner outdoor unit is realized.

Optionally, the target position is the position of the end of the shield plate away from the reel shaft relative to the reel shaft after adjustment.

Optionally, the target communication ratio is the ratio of a target communication area after adjustment between the heat exchanger and the external environment to the maximum communication area. The maximum communication area is the communication area between the heat exchanger and the external environment when the end of the shield plate far away from the reel shaft is further wound on the reel shaft, and the communication opening is completely exposed.

Optionally, the target communication ratio ranges from [0%, 100%]. The preset target communication ratio can be selected according to the actual operation condition of the air conditioner. In some embodiments, the preset target communication ratio can be 0%, 25%, 50%, 75%, or 100%. When the communication area between the heat exchanger and the external environment needs to be reduced, the target communication ratio can be adjusted to be lower sequentially. When the communication area between the heat exchanger and the external environment needs to be increased, the target communication ratio can be increased sequentially. The target communication ratio will not continue to decrease when reaching 0%, and the target communication ratio will not continue to increase when reaching 100%.

Optionally, the second association relationship comprises a corresponding relationship between one or more target communication ratios and the target positions. In some embodiments, when the target communication ratio is 0%, the target position is farthest from the reel shaft. And when the target communication ratio is 100%, the target position is closest to the reel shaft.

Optionally, the rotating speed of the outdoor fan is less than a preset rotating speed threshold.

Optionally, the rotating speed threshold is lower than the rated rotating speed of the outdoor fan of the air conditioner in a standard cooling mode. In a case where the rotating speed of the outdoor fan needs to be reduced to restrain the heat exchange amount, the method for adjusting the heat exchange amount in the embodiment of the present disclosure can be entered. Therefore, according to the embodiment of the present disclosure, on the premise of not influencing the normal operation of the air conditioner, an adjusting means for adjusting the heat exchange amount of the air conditioner outdoor unit is added to cope with a special scene of cooling operation at low temperature.

Optionally, the step of, obtaining the suction superheat of the compressor comprises: detecting the suction temperature t1 of the compressor and the refrigerant evaporation temperature t3; and calculating Δt1= t1-t3 to obtain the suction superheat Δt1.

Optionally, the step of, obtaining the discharge superheat of the compressor comprises: detecting the discharge temperature t2 of the compressor and the refrigerant condensation temperature t4; and calculating Δt2 = t2-t4 to obtain the discharge superheat Δt2.

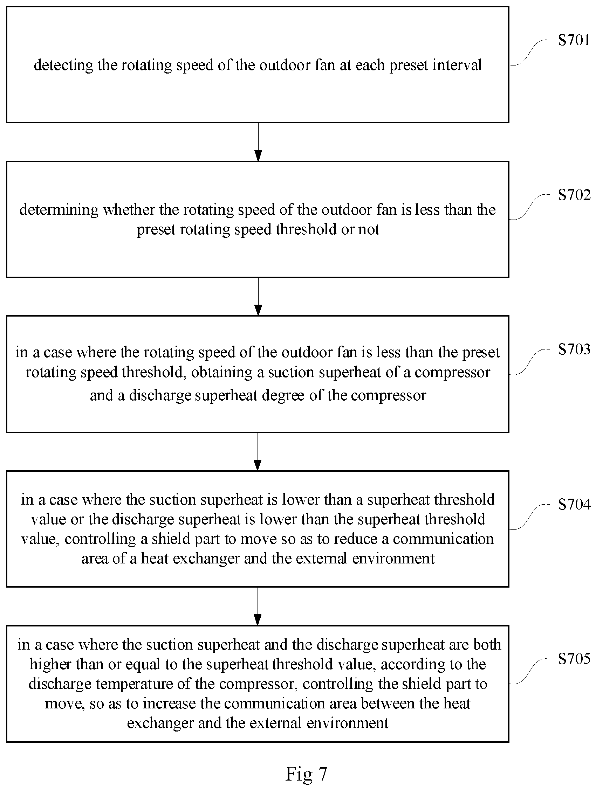

As shown in Fig. 7, the embodiment of the present invention provides another method for adjusting the heat exchange quantity of the air conditioner outdoor unit comprising:
S701, detecting the rotating speed of the outdoor fan at each preset interval;
S702, determining whether the rotating speed of the outdoor fan is less than the preset rotating speed threshold or not ;
S703, in a case where the rotating speed of the outdoor fan is less than the preset rotating speed threshold, obtaining a suction superheat of the refrigerant in the compressor and a discharge superheat degree of the refrigerant in the compressor.

The method further comprises: S704, in a case where the suction superheat is lower than a superheat threshold value or the discharge superheat is lower than the superheat threshold value, controlling a shield part to move to cover the communication opening, so as to reduce a communication area of a heat exchanger and the external environment; and
S705, in a case where the suction superheat and the discharge superheat are both higher than or equal to the superheat threshold value, according to the discharge temperature of the compressor, controlling the shield part to move to expose the communication opening, so as to increase the communication area between the heat exchanger and the external environment.

According to the method for adjusting the heat exchange amount of the air conditioner outdoor unit, which is provided by the embodiment of the invention, the steps for adjusting the heat exchange amount can be determined by regularly detecting the rotating speed of the outdoor fan. In the process of adjusting the heat exchange amount, the exposed area of the heat exchanger of the outdoor unit is adjusted by controlling the shield part to move, thereby the adjustment of the heat exchange amount of the air conditioner outdoor unit is realized. In the embodiment of the present disclosure, the change of the performance parameters of the compressor is detected again after the heat exchange amount adjustment process is executed at intervals, and a new cycle of heat exchange amount adjustment is performed according to the change. The negative feedback adjustment can ensure that the performance parameters of the compressor always remain within a reasonable range, and eventually, the air conditioner can not only automatically adjust the heat exchange amount of the outdoor unit, but also improve the reliability of the compressor when the compressor is running at a low temperature.

Optionally, the speed threshold is less than the rated rotating speed of the outdoor fan of the air conditioner in the standard cooling mode. In a case where the rotating speed of the outdoor fan needs to be reduced to restrain the heat exchange amount, the steps of adjusting the heat exchange amount in the embodiment of the present disclosure can be entered. Therefore, according to the embodiment of the present disclosure, the means for adjusting the heat exchange amount of the air conditioner outdoor unit can be added on the premise that the normal operation of the air conditioner is not affected, so as to cope with a special scene of cooling operation at low temperature.

Optionally, the value range of the preset interval is (0 min, 100 min]. Optionally, the preset interval is taken as 10 min. The preset interval can be adjusted according to the actual operation of the air conditioner, and can also be any other value such as 5 min or 15 min. Therefore, the air conditioner can have a new cycle of heat exchange amount adjustment in time according to the performance parameters of the compressor so as to ensure that the performance parameters of the compressor are always kept within a reasonable range, and eventually, the air conditioner can automatically adjust the heat exchange amount and improve the reliability of the compressor.

Optionally, in a case where the rotating speed of the outdoor fan is higher than or equal to the preset rotating speed threshold, the air conditioner reduces the rotating speed of the outdoor fan. Optionally, the reduced rotating speed of the outdoor fan can be still higher than the preset speed threshold.

Optionally, in a case where the rotating speed of the outdoor fan is higher than or equal to a preset rotating speed threshold, the air conditioner reduces the rotating speed of the compressor. Thus, the air conditioner can reduce the refrigerant flow and control the heat exchange to a certain extent.

Optionally, in a case where the rotating speed of the outdoor fan is greater than or equal to the preset rotating speed threshold, the expansion valve is turned off via the air conditioner. Thus, the air conditioner can reduce the refrigerant flow to ensure that the difference between the refrigerant evaporation temperature and the refrigerant condensation temperature remains stable.

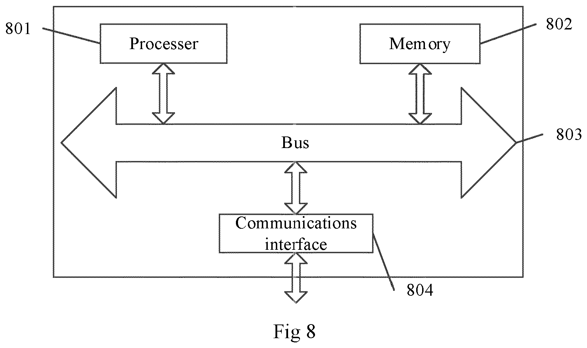

As shown in Fig. 8, the embodiment of the present invention provides a device for adjusting the heat exchange amount of an air conditioner outdoor unit, which comprises a processor 801 and a memory 802. Optionally the device can also comprise a communication interface 804 and a bus 803. The processor 801, the communication interface 803, and the memory 802 are communicated with each other through the bus 803. The communication interface 804 may be configured for information transmission. The processor 801 can invoke logic instructions in the memory 802 to execute the method for adjusting the heat exchange amount of an air conditioner outdoor unit in the above-described embodiment.

Further, the logic instructions in the memory 802 described above can be realized in the form of software functional units and can be stored in a computer-readable storage medium when sold or used as a separate product.

As a computer-readable storage medium, the memory 802 can be configured to store software programs, and computer executable programs, such as program instructions/modules corresponding to the methods in embodiments of the present disclosure. The processor 801 executes the function application and data processing by running the program instructions/modules stored in the memory 802 that is to implement the method for adjusting the heat exchange amount of an air conditioner outdoor unit in the above-described embodiment.

The memory 802 can comprise a stored program area and a stored data area wherein the stored program area can store an operating system and an application program required for at least one function. The storage data area can store data created according to the use of the terminal device. In addition, the memory 802 can comprise a high-speed random access memory and can also comprise a non-transitory memory.

Examples not covered by the present invention provide a storage medium storing computer-executable instructions configured to execute the above-described method for adjusting the heat exchange amount of an air conditioner outdoor unit.

The computer-readable storage medium may be a transient computer-readable storage medium or a non-transitory computer-readable storage medium.

The technical proposal of an example not falling under the present invention can be embodied in the form of a software product, The computer software product is stored in a storage medium and comprises one or more instructions for causing a computer device (which can be a personal computer, server, or network device, etc.) to perform all or part of the steps of the method described in the embodiment of the present disclosure. The mentioned storage medium can be a non-transient storage medium, comprising a USB disk, a mobile hard disk, a Read-Only Memory (ROM), a Random Access Memory (RAM), a magnetic disk or an optical disk, and other media capable of storing program codes or maybe a transient storage medium.

The above description and drawings sufficiently illustrate embodiments of the present invention to enable practice by those skilled in the art.

The described embodiments may be altered, modified or combined within the scope of the invention as defined by the appended claims.

## Claims

1. A method for adjusting a heat exchange amount of an air conditioner outdoor unit, wherein the air conditioner outdoor unit comprises: a housing (100) disposed with an internal installation space defined by a plurality of side walls, at least one of the side walls being disposed with a communication opening (101), a compressor disposed in the internal installation space, a heat exchanger (200) disposed in the internal installation space and communicated with the external environment for heat exchange through the communication opening (101) and a shield part (300) movably disposed at the communication opening (101); **characterized in that**, the method comprising:
obtaining (S601) a suction superheat of a refrigerant in the compressor and a discharge superheat of the refrigerant in the compressor;
in case where the suction superheat is lower than a superheat threshold value or the discharge superheat is lower than the superheat threshold value, controlling (S602) the shield part (300) to move to cover the communication opening (101), to reduce a communication area between the heat exchanger (200) and the external environment; and
in case where the suction superheat and the discharge superheat are higher than or equal to the superheat threshold value and the discharge temperature of the compressor is higher than a discharge temperature threshold, controlling the shield part (300) to move to expose the communication opening (101), to increase the communication area between the heat exchanger (200) and the external environment.

2. The method according to claim 1, wherein the shield part (300) comprises a shield plate (303) controllable to rotate or slide, and the step of, controlling the shield part (300) to move to cover the communication opening (101) or expose the communication opening (101) comprises:
according to a preset target communication ratio, searching a corresponding target angle from a first association relationship, and controlling the shield plate (303) to rotate to the target angle; or
according to a preset target communication ratio, searching a corresponding target position from the second association relationship, and controlling the shield plate (303) to slide to the target position.

3. The method according to claim 1 or 2, wherein the air conditioner outdoor unit further comprises an outdoor fan disposed in the internal installation space, and a rotating speed of the outdoor fan is less than a preset rotating speed threshold.

4. The method according to any one of claims 1 to 3, wherein the step of, obtaining the suction superheat of the refrigerant in the compressor and the discharge superheat of the refrigerant in the compressor further comprises:
detecting (S701) a rotating speed of the outdoor fan at each preset interval;
determining (S702) the rotating speed of the outdoor fan is smaller than a preset rotating speed threshold or not; and
in case where the rotating speed of the outdoor fan is less than the preset rotating speed threshold, obtaining (S703) the suction superheat of the refrigerant in the compressor and the discharge superheat of the refrigerant in the compressor.

5. A device for adjusting the heat exchange amount of an air conditioner outdoor unit, comprising a processor (801) and a memory (802) storing program instructions, **characterized in that**, the processor (801) is configured to execute the method for adjusting the heat exchange amount of an air conditioner outdoor unit according to any one of claims 1 to 4 when executing the program instructions.

6. An air conditioner outdoor unit, comprising:
a housing (100) disposed with an internal installation space defined by a plurality of side walls, at least one of the side walls being disposed with a communication opening (101);
a compressor disposed in the internal installation space;
a heat exchanger (200) disposed in the internal installation space and communicated with the external environment for heat exchange through the communication opening (101);
a shield part (300) movably disposed in the communication opening (101); and
a device for adjusting the heat exchange amount of the air conditioner outdoor, disposed in the internal installation space, and electrically connected with the shield part (300), comprising a processor (801) and a memory (802) storing program instructions, **characterized in that**, the processor (801) is configured to execute steps of:
obtaining (S601) a suction superheat of a refrigerant in the compressor and a discharge superheat of the refrigerant in the compressor;
in case where the suction superheat is lower than a superheat threshold value or the discharge superheat is lower than the superheat threshold value, controlling (S602) the shield part (300) to move to cover the communication opening (101), to reduce a communication area between the heat exchanger (200) and the external environment; and
in case where the suction superheat and the discharge superheat are higher than or equal to the superheat threshold value and the discharge temperature of the compressor is higher than a discharge temperature threshold, controlling the shield part (300) to move to expose the communication opening (101), to increase the communication area between the heat exchanger (200) and the external environment.

7. The air conditioner outdoor unit according to claim 6, wherein the shield part (300) comprises:
a support body (301) disposed on one or more sides of the communication opening (101);
a reel shaft (302) disposed on the support body (301);
a shield plate (303) connected to the reel shaft (302) and controllably wound onto the reel shaft (302); and
a drive part (304) disposed on the support body (301), connected to the reel shaft (302), electrically connected to the device for adjusting the heat exchange amount of the air conditioner outdoor unit, and configured to drive the reel shaft (302) to rotate.

8. The air conditioner outdoor unit according to claim 6, wherein the shield part (300) comprises:
a support body (301) disposed on one or more sides of the communication opening (101);
a rotation shaft (305) disposed to the support body (301);
a shield plate (303) connected to the rotation shaft (305) and controllably rotated along with the rotation shaft (305); and
a drive part (304) disposed on the support body (301), connected to the rotation shaft (305), electrically connected to the device for adjusting the heat exchange amount of the air conditioner outdoor unit, and configured to drive the rotation shaft (305) to rotate.

9. The air conditioner outdoor unit according to claim 8, comprising a plurality of rotation shafts (305) disposed in parallel.

10. The air conditioner outdoor unit according to claim 9, wherein the shield plate (303) comprises a plurality of rotatable blades (306) connected to the plurality of rotation shafts (305), and the plurality of rotatable blades (306) correspond to the plurality of rotation shafts (305) one by one.

11. The air conditioner outdoor unit according to claim 7 or 8, wherein the shield plate (303) is flexible.

12. The air conditioner outdoor unit according to claim 11, wherein one or more sides of the support body (301) close to the shield plate (303) are disposed with a guide groove.

13. The air conditioner outdoor unit according to claim 7 or 8, wherein the shield plate (303) is rigid and the shield plate (303) comprises a plurality of blades (306) connected in sequence.

14. The air conditioner outdoor unit according to claim 13, wherein the plurality of blades (306) be connected in series and in sequence with a steel wire.

## Patentansprüche

1. Verfahren zum Einstellen einer Wärmeaustauschmenge einer Klimaanlagenaußeneinheit, wobei die Klimaanlagenaußeneinheit aufweist: ein Gehäuse (100), das mit einem inneren Einbauraum ausgebildet ist, welcher durch mehrere Seitenwände definiert ist, wobei mindestens eine Seitenwand mit einer Verbindungsöffnung (101) versehen ist, einen in dem inneren Einbauraum angeordneten Kompressor, einen Wärmetauscher (200), der in dem inneren Einbauhohlraum angeordnet ist und mit der Außenumgebung zum Wärmetausch durch die Verbindungsöffnung (101) verbunden ist, und ein bewegbar an der Verbindungsöffnung (101) angeordnetes Abschirmteil (300), **dadurch gekennzeichnet, dass** das Verfahren die folgenden Schritte aufweist:
Erfassen (S601) einer Saugüberhitzung eines Kühlmittels in dem Kompressor und einer Auslassüberhitzung des Kühlmittels in dem Kompressor;
wenn die Saugüberhitzung geringer ist als ein Überhitzungsschwellenwert oder die Auslassüberhitzung geringer ist als der Überhitzungsschwellenwert, Steuern (S602) des Abschirmteils (300) derart, dass es sich zum Abdecken der Verbindungsöffnung (101) bewegt, um eine Verbindungsfläche zwischen dem Wärmetauscher (200) und der Außenumgebung zu verringern; und
wenn die Saugüberhitzung und die Auslassüberhitzung höher als oder gleich dem Überhitzungsschwellenwert sind und die Auslasstemperatur des Kompressors höher als ein Auslasstemperaturschwellenwert ist, Steuern des Abschirmteils (300) derart, dass es sich zum Freigeben der Verbindungsöffnung (101) bewegt, um die Verbindungsfläche zwischen dem Wärmetauscher (200) und der Außenumgebung zu vergrößern.

2. Verfahren nach Anspruch 1, bei welchem das Abschirmteil (300) eine Abschirmplatte (303) aufweist, die zum Drehen oder Gleiten steuerbar ist, und der Schritt des Steuerns des Abschirmteils (300), sich zum Abdecken der Verbindungsöffnung (101) oder zum Freigeben der Verbindungsöffnung (101) die folgenden Schritte aufweist:
gemäß einem voreingestellten Ziel-Verbindungsverhältnis, Suchen eines entsprechenden Ziel-Winkels aus einem ersten Zuordnungsverhältnis, und Steuern der Abschirmplatte (303) zum Drehen in den Ziel-Winkel; oder
gemäß einem voreingestellten Ziel-Verbindungsverhältnis, Suchen eines entsprechenden Ziel-Position aus dem zweiten Zuordnungsverhältnis, und Steuern der Abschirmplatte (303) zum Gleiten in die Ziel-Position.

3. Verfahren nach Anspruch 1 oder 2, bei welchem die Klimaanlagenaußeneinheit ferner ein Außengebläse aufweist, das in dem inneren Einbauraum angeordnet ist, und eine Drehzahl des Außengebläses geringer als ein voreingestellter Drehzahlschwellenwert ist.

4. Verfahren nach einem der Ansprüche 1 bis 3, bei welchem der Schritt des Erfassens der Saugüberhitzung des Kühlmittels in dem Kompressor und der Auslassüberhitzung des Kühlmittels in dem Kompressor ferner die folgenden Schritte aufweist:
Erkennen (S701) einer Drehzahl des Außengebläses in jedem voreingestellten Intervall;
Feststellen (S702), ob die Drehzahl des Außengebläses geringer als ein voreingestellter Drehzahlschwellenwert ist oder nicht; und
wenn die Drehzahl des Außengebläses geringer als der voreingestellte Drehzahlschwellenwert ist, Erfassen (S705) der Saugüberhitzung des Kühlmittels in dem Kompressor und der Auslassüberhitzung des Kühlmittels in dem Kompressor.

5. Vorrichtung zum Einstellen der Wärmeaustauschmenge einer Klimaanlagenaußeneinheit, mit einem Prozessor (801) und einem Speicher (802), der Programmbefehle speichert, **dadurch gekennzeichnet, dass** der Prozessor (801) dazu ausgebildet ist, bei Ausführung der Programmbefehle das Verfahren zum Einstellen der Wärmeaustauschmenge einer Klimaanlagenaußeneinheit nach einem der Ansprüche 1 bis 4 auszuführen.

6. Klimaanlagenaußeneinheit mit:
einem Gehäuse (100), das mit einem inneren Einbauraum ausgebildet ist, welcher durch mehrere Seitenwände definiert ist, wobei mindestens eine Seitenwand mit einer Verbindungsöffnung (101) versehen ist;
einem in dem inneren Einbauraum angeordneten Kompressor;
einen Wärmetauscher (200), der in dem inneren Einbauhohlraum angeordnet ist und mit der Außenumgebung zum Wärmetausch durch die Verbindungsöffnung (101) verbunden ist;
und einem bewegbar an der Verbindungsöffnung (101) angeordneten Abschirmteil (300); und
einer Vorrichtung zum Einstellen der Wärmeaustauschmenge einer Klimaanlagenaußeneinheit, die in dem inneren Einbauraum angeordnet ist und elektrisch mit dem Abschirmteil (300) verbunden ist, mit einem Prozessor (801) und einem Speicher (802), der Programmbefehle speichert, **dadurch gekennzeichnet, dass** der Prozessor (801) dazu ausgebildet ist, die folgenden Schritte auszuführen:
Erfassen (S601) einer Saugüberhitzung eines Kühlmittels in dem Kompressor und einer Auslassüberhitzung des Kühlmittels in dem Kompressor;
wenn die Saugüberhitzung geringer ist als ein Überhitzungsschwellenwert oder die Auslassüberhitzung geringer ist als der Überhitzungsschwellenwert, Steuern (S602) des Abschirmteils (300) derart, dass es sich zum Abdecken der Verbindungsöffnung (101) bewegt, um eine Verbindungsfläche zwischen dem Wärmetauscher (200) und der Außenumgebung zu verringern; und
wenn die Saugüberhitzung und die Auslassüberhitzung höher als oder gleich dem Überhitzungsschwellenwert sind und die Auslasstemperatur des Kompressors höher als ein Auslasstemperaturschwellenwert ist, Steuern des Abschirmteils (300) derart, dass es sich zum Freigeben der Verbindungsöffnung (101) bewegt, um die Verbindungsfläche zwischen dem Wärmetauscher (200) und der Außenumgebung zu vergrößern.

7. Klimaanlagenaußeneinheit nach Anspruch 6, bei welcher das Abschirmteil (300) aufweist:
einen Stützkörper (301), der auf einer oder mehreren Seiten der Verbindungsöffnung (101) angeordnet ist;
eine Wickelwelle (302), die an dem Stützkörper (301) angeordnet ist;
eine Abschirmplatte (303), die mit der Wickelwelle (302) verbunden ist und steuerbar auf die Wickelwelle (302) aufgewickelt ist; und
ein Antriebsteil (304), das an dem Stützkörper (301) angeordnet ist, mit der Wickelwelle (302) verbunden ist, elektrisch mit der Vorrichtung zum Einstellen der Wärmeaustauschmenge der Klimaanlagenaußeneinheit verbunden ist, und dazu ausgebildet ist, die Wickelwelle (302) drehend anzutreiben.

8. Klimaanlagenaußeneinheit nach Anspruch 6, bei welcher das Abschirmteil (300) aufweist:
einen Stützkörper (301), der auf einer oder mehreren Seiten der Verbindungsöffnung (101) angeordnet ist;
eine Drehwelle (305), die an dem Stützkörper (301) angeordnet ist;
eine Abschirmplatte (303), die mit der Drehwelle (305) verbunden und steuerbar zusammen mit der Drehwelle (305) drehbar ist; und
ein Antriebsteil (304), das an dem Stützkörper (301) angeordnet ist, mit der Drehwelle (305) verbunden ist, elektrisch mit der Vorrichtung zum Einstellen der Wärmeaustauschmenge der Klimaanlagenaußeneinheit verbunden ist, und dazu ausgebildet ist, die Drehwelle (305) drehend anzutreiben.

9. Klimaanlagenaußeneinheit nach Anspruch 8, mit mehreren parallel angeordneten Drehwellen (305).

10. Klimaanlagenaußeneinheit nach Anspruch 9, bei welcher die Abschirmplatte (303) mehrere drehbare Lamellen (306), die mit den mehreren Drehwellen (305) verbunden sind, und die mehreren drehbaren Lamellen (306) den mehreren Drehwellen (305) eins zu eins entsprechen.

11. Klimaanlagenaußeneinheit nach Anspruch 7 oder 8, bei welcher die Abschirmplatte (303) flexibel ist.

12. Klimaanlagenaußeneinheit nach Anspruch 11, bei welcher eine oder mehrere, der Abschirmplatte (303) nahen Seiten des Stützkörpers (301) mit einer Führungsnut versehen sind.

13. Klimaanlagenaußeneinheit nach Anspruch 7 oder 8, bei welcher die Abschirmplatte (303) starr ist, und die Abschirmplatte (303) mehrere aufeinanderfolgend verbundene Lamellen (306) aufweist.

14. Klimaanlagenaußeneinheit nach Anspruch 13, bei welcher die mehreren Lamellen (306) in Reihe und aufeinanderfolgend mit einem Stahldraht verbunden sind.

## Revendications

1. Procédé de réglage d'une quantité d'échange de chaleur d'une unité extérieure de conditionneur d'air, dans lequel l'unité extérieure de conditionneur d'air comprend : un boîtier (100) pourvu d'un espace d'installation interne délimité par une pluralité de parois latérales, au moins l'une des parois latérales étant pourvue d'une ouverture de communication (101), un compresseur disposé dans l'espace d'installation interne, un échangeur de chaleur (200) disposé dans l'espace d'installation interne et en communication avec l'environnement externe à des fins d'échange de chaleur par l'intermédiaire de l'ouverture de communication (101) et une partie écran (300) disposée mobile au niveau de l'ouverture de communication (101) ; **caractérisé en ce que** le procédé comprend les étapes consistant à :
obtenir (S601) une chaleur de surchauffe d'aspiration d'un fluide frigorigène dans le compresseur et une chaleur de surchauffe de décharge du fluide frigorigène dans le compresseur ;
dans un cas dans lequel la chaleur de surchauffe d'aspiration est inférieure à une valeur seuil de chaleur de surchauffe ou dans lequel la chaleur de surchauffe de décharge est inférieure à la valeur seuil de chaleur de surchauffe, commander (S602) la partie écran (300) pour qu'elle se déplace de façon à couvrir l'ouverture de communication (101), pour réduire une superficie de communication entre l'échangeur de chaleur (200) et l'environnement externe ; et
dans un cas dans lequel la chaleur de surchauffe d'aspiration et la chaleur de surchauffe de décharge sont supérieures ou égales à la valeur seuil de chaleur de surchauffe et dans lequel la température de décharge du compresseur est supérieure à un seuil de température de décharge, commander la partie écran (300) pour qu'elle se déplace de façon à exposer l'ouverture de communication (101), pour augmenter la superficie de communication entre l'échangeur de chaleur (200) et l'environnement externe.

2. Procédé selon la revendication 1, dans lequel la partie écran (300) comprend une plaque écran (303) pouvant être commandée pour pivoter ou coulisser, et l'étape de commande de la partie écran (300) pour qu'elle se déplace de façon à couvrir l'ouverture de communication (101) ou à exposer l'ouverture de communication (101) consiste à :
conformément à un taux de communication cible prédéfini, rechercher un angle cible correspondant à partir d'une première relation d'association, et commander la plaque écran (303) pour qu'elle pivote à l'angle cible ; ou
conformément à un taux de communication cible prédéfini, rechercher une position cible correspondante à partir de la seconde relation d'association, et commander la plaque écran (303) pour qu'elle coulisse jusqu'à la position cible.

3. Procédé selon la revendication 1 ou la revendication 2, dans lequel l'unité extérieure de conditionneur d'air comprend en outre un ventilateur extérieur disposé dans l'espace d'installation interne, et une vitesse de rotation du ventilateur extérieur est inférieure à un seuil de vitesse de rotation prédéfini.

4. Procédé selon l'une quelconque des revendications 1 à 3, dans lequel l'étape d'obtention de la chaleur de surchauffe d'aspiration du fluide frigorigène dans le compresseur et de la chaleur de surchauffe de décharge du fluide frigorigène dans le compresseur comprend en outre les étapes consistant à :
détecter (S701) une vitesse de rotation du ventilateur extérieur à chaque intervalle prédéfini ;
déterminer (S702) si la vitesse de rotation du ventilateur extérieur est, ou non, inférieure à un seuil de vitesse de rotation prédéfini ; et
dans un cas dans lequel la vitesse de rotation du ventilateur extérieur est inférieure au seuil de vitesse de rotation prédéfini, obtenir (S703) la chaleur de surchauffe d'aspiration du fluide frigorigène dans le compresseur et la chaleur de surchauffe de décharge du fluide frigorigène dans le compresseur.

5. Dispositif de réglage de la quantité d'échange de chaleur d'une unité extérieure de conditionneur d'air, comprenant un processeur (801) et une mémoire (802) maintenant des instructions de programme, **caractérisé en ce que** le processeur (801) est configuré pour exécuter le procédé de réglage de la quantité d'échange de chaleur d'une unité extérieure de conditionneur d'air selon l'une quelconque des revendications 1 à 4 lors de l'exécution des instructions de programme.

6. Unité extérieure de conditionneur d'air, comprenant :
un boîtier (100) pourvu d'un espace d'installation interne délimité par une pluralité de parois latérales, au moins l'une des parois latérales étant pourvue d'une ouverture de communication (101) ;
un compresseur disposé dans l'espace d'installation interne ;
un échangeur de chaleur (200) disposé dans l'espace d'installation interne et en communication avec l'environnement externe à des fins d'échange de chaleur par l'intermédiaire de l'ouverture de communication (101) ;
une partie écran (300) disposée mobile dans l'ouverture de communication (101) ; et
un dispositif de réglage de la quantité d'échange de chaleur de l'unité extérieure de conditionneur d'air, disposé dans l'espace d'installation interne, et connecté électriquement à la partie écran (300), comprenant un processeur (801) et une mémoire (802) maintenant des instructions de programme, **caractérisée en ce que** le processeur (801) est configuré pour exécuter les étapes consistant à :
obtenir (S601) une chaleur de surchauffe d'aspiration d'un fluide frigorigène dans le compresseur et une chaleur de surchauffe de décharge du fluide frigorigène dans le compresseur ;
dans un cas dans lequel la chaleur de surchauffe d'aspiration est inférieure à une valeur seuil de chaleur de surchauffe ou dans lequel la chaleur de surchauffe de décharge est inférieure à la valeur seuil de chaleur de surchauffe, commander (S602) la partie écran (300) pour qu'elle se déplace de façon à couvrir l'ouverture de communication (101), pour réduire une superficie de communication entre l'échangeur de chaleur (200) et l'environnement externe ; et
dans un cas dans lequel la chaleur de surchauffe d'aspiration et la chaleur de surchauffe de décharge sont supérieures ou égales à la valeur seuil de chaleur de surchauffe et dans lequel la température de décharge du compresseur est supérieure à un seuil de température de décharge, commander la partie écran (300) pour qu'elle se déplace de façon à exposer l'ouverture de communication (101), pour augmenter la superficie de communication entre l'échangeur de chaleur (200) et l'environnement externe.

7. Unité extérieure de conditionneur d'air selon la revendication 6, dans laquelle la partie écran (300) comprend :
un corps de support (301) disposé sur un ou plusieurs côtés de l'ouverture de communication (101) ;
un arbre de bobine (302) disposé sur le corps de support (301) ;
une plaque écran (303) en prise avec l'arbre de bobine (302) et s'enroulant de manière commandée sur l'arbre de bobine (302) ; et
une partie d'entraînement (304) disposée sur le corps de support (301), en prise avec l'arbre de bobine (302), connectée électriquement au dispositif de réglage de la quantité d'échange de chaleur de l'unité extérieure de conditionneur d'air, et configurée pour entraîner en rotation l'arbre de bobine (302).

8. Unité extérieure de conditionneur d'air selon la revendication 6, dans laquelle la partie écran (300) comprend :
un corps de support (301) disposé sur un ou plusieurs côtés de l'ouverture de communication (101) ;
un arbre de rotation (305) disposé sur le corps de support (301) ;
une plaque écran (303) en prise avec l'arbre de rotation (305) et amenée à pivoter de manière commandée conjointement avec l'arbre de rotation (305) ; et
une partie d'entraînement (304) disposée sur le corps de support (301), en prise avec l'arbre de rotation (305), connectée électriquement au dispositif de réglage de la quantité d'échange de chaleur de l'unité extérieure de conditionneur d'air, et configurée pour entraîner en rotation l'arbre de rotation (305).

9. Unité extérieure de conditionneur d'air selon la revendication 8, comprenant une pluralité d'arbres de rotation (305) disposés en parallèle.

10. Unité extérieure de conditionneur d'air selon la revendication 9, dans laquelle la plaque écran (303) comprend une pluralité de lames pouvant pivoter (306) en prise avec la pluralité d'arbres de rotation (305), et les lames de la pluralité de lames pouvant pivoter (306) ont une correspondance biunivoque avec les arbres de la pluralité d'arbres de rotation (305).

11. Unité extérieure de conditionneur d'air selon la revendication 7 ou la revendication 8, dans laquelle la plaque écran (303) est flexible.

12. Unité extérieure de conditionneur d'air selon la revendication 11, dans laquelle un ou plusieurs côtés du corps de support (301) proches de la plaque écran (303) sont pourvus d'une rainure de guidage.

13. Unité extérieure de conditionneur d'air selon la revendication 7 ou la revendication 8, dans laquelle la plaque écran (303) est rigide et la plaque écran (303) comprend une pluralité de lames (306) reliées en séquence.

14. Unité extérieure de conditionneur d'air selon la revendication 13, dans laquelle les lames de la pluralité de lames (306) peuvent être reliées en série et en séquence avec un fil d'acier.
